# EUROPEAN PATENT APPLICATION

(11) **EP 4 667 119 A1**
(43) Date of publication of application: **24.12.2025**
(21) Application number: 25159842.1
(22) Date of filing: 25.02.2025
(51) Int. Cl.: B05B 9/08

(54) **ELECTRIC WORKING MACHINE**

(30) Priority: 19.06.2024 JP 2024098813
(71) Applicant: Yamabiko Corporation, Ohme-shi, Tokyo 198-8760 (JP)
(72) Inventor: MIYAKI, Hiroyuki, Ohme-shi, Tokyo, 1988760 (JP); MEGURO, Tomoya, Ohme-shi, Tokyo, 1988760 (JP); ASANO, Ryuta, Ohme-shi, Tokyo, 1988760 (JP)
(74) Representative: Winter, Brandl - Partnerschaft mbB

(57) **Abstract**

According to an aspect of the present disclosure, a backpack type electric working machine adapted to be used by attaching a battery is provided. The electric working machine comprises: a working machine body including a storage case configured to store the battery and a connection terminal configured to be electrically connected to the battery; and a back carrying part attached to the working machine body and used by an operator to carry the working machine body on his/her back, the storage case including a tubular barrel, a drain hole opening downward from the barrel, and an opening configured to allow the battery to be introduced to an inner side of the barrel, the connection terminal being arranged on an inner side of the barrel opposite the opening, the drain hole being provided between the connection terminal and the opening.

## Description

### BACKGROUND

The present disclosure relates to an electric working machine.

### RELATED ART

Conventionally, a backpack type sprayer has been proposed (see CN 111774201 A). The sprayer includes a water tank, a water pump, a power supply unit, and a spray rod. The power supply unit is arranged below the water tank and includes a battery mounting box with a horizontal mounting opening. A rotatable protective cover is arranged in the mounting opening. Furthermore, a connection terminal to be connected to a battery is provided on the upper side in the battery mounting box.

In such a sprayer, when a user injects liquid into a water inlet formed at the top of the water tank, if the liquid leaks onto the outer surface of the water tank, the liquid may go along the outer surface of the water tank and enter (flow into) the battery mounting box through a mating surface between the water tank and the battery mounting box. If liquid enters the battery mounting box, it may adversely affect electrical components such as batteries and connection terminals.

In view of the above circumstances, the present disclosure provides an electric working machine that is unlikely to adversely affect electric components even if liquid enters a battery storage case (battery mounting box).

### Means for Solving Problems

According to one aspect of the present disclosure, a backpack type electric working machine adapted to be used by attaching a battery is provided. The electric working machine includes a working machine body including a storage case configured to store the battery and a connection terminal configured to be electrically connected to the battery; and a back carrying part attached to the working machine body and used by an operator to carry the working machine body on his/her back, the storage case includes a tubular barrel, a drain hole opening downward from the barrel, and an opening configured to allow the battery to be introduced to an inner side of the barrel, the connection terminal is arranged on an inner side of the barrel opposite the opening, and the drain hole is provided between the connection terminal and the opening.

According to such an aspect, liquid that has entered the storage case can be smoothly discharged, and thus it is unlikely to adversely affect electrical components.

### BRIEF DESCRIPTION OF DRAWINGS

FIG. 1 a perspective view showing a configuration of a power sprayer, which is an example of an electric working machine.
FIG. 2 is a front view of the power sprayer shown in FIG. 1.
FIG. 3 is a cross-sectional view taken along line A-A in FIG. 2.
FIG. 4 is a perspective view showing a configuration of a battery storage portion.
FIG. 5 is a side view showing a state in which a lid of the battery storage portion is opened.
FIG. 6 is a perspective view showing a configuration of a battery storage case.
FIG. 7 is a bottom view of the battery storage case shown in FIG. 6.
FIG. 8A and FIG. 8B illustrate how the liquid flows.
FIG. 9 illustrates how the liquid flows.

### DETAILED DESCRIPTION

Hereinafter, an embodiment of a power sprayer, which is an example of a backpack type electric working machine adapted to be used by attaching a battery 100, will be described using the attached drawings. Various features described in the embodiment below can be combined with each other.

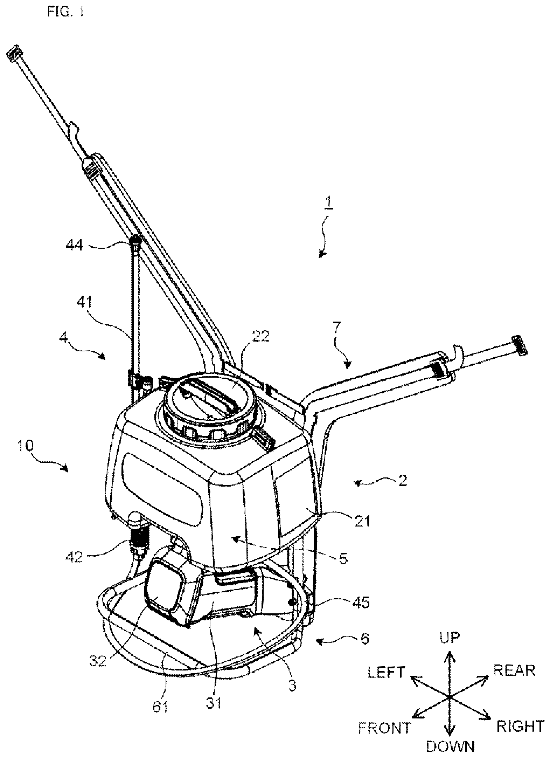

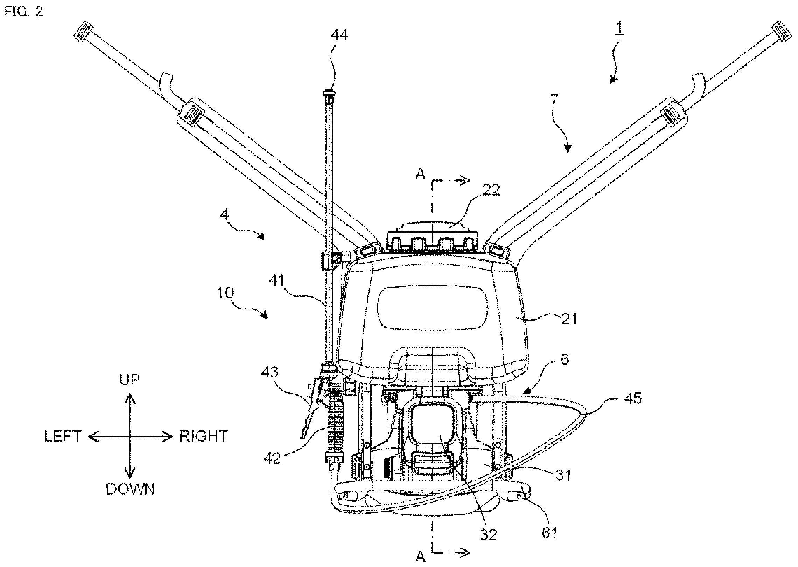

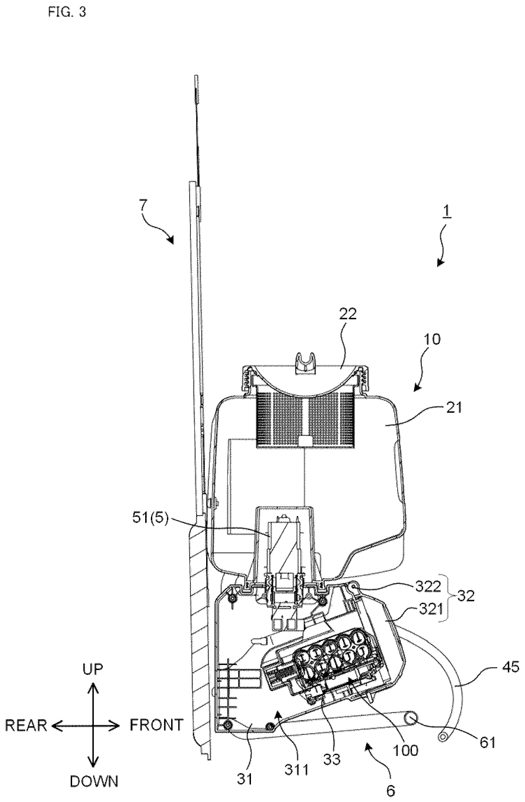

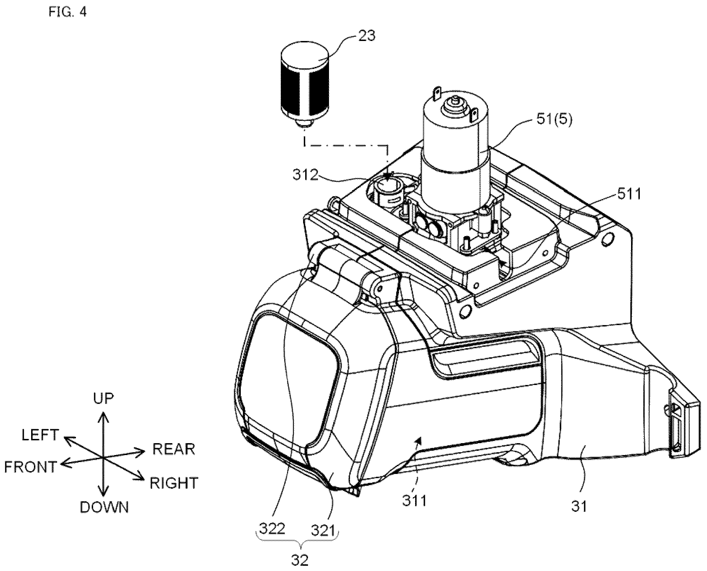

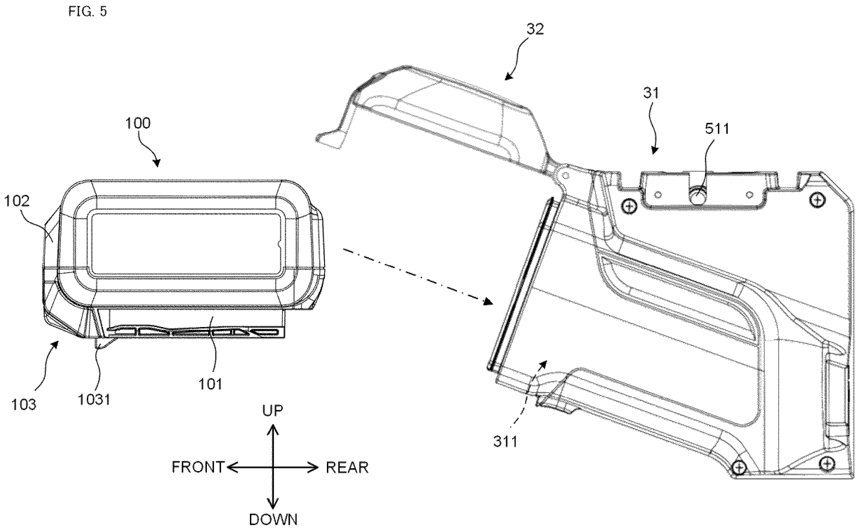

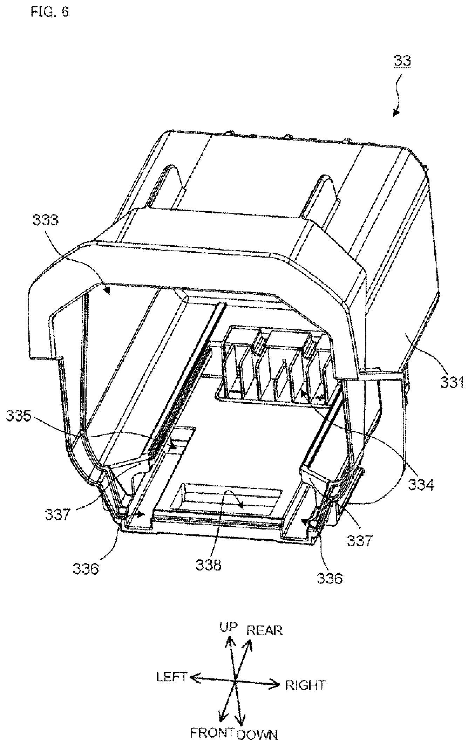

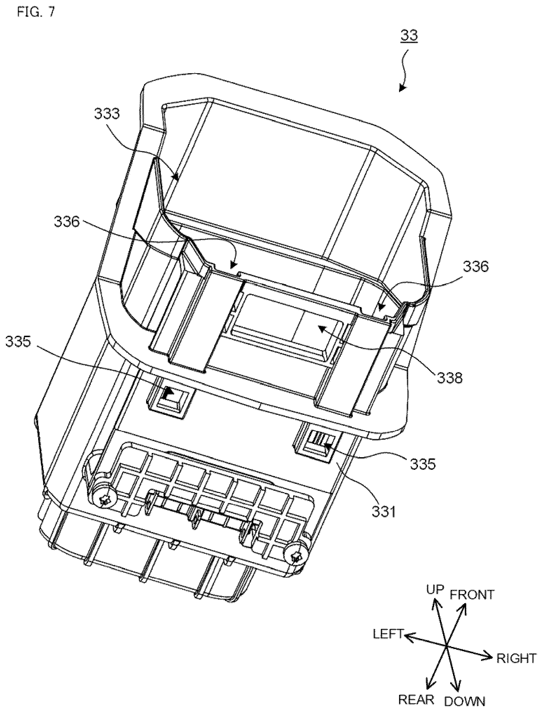

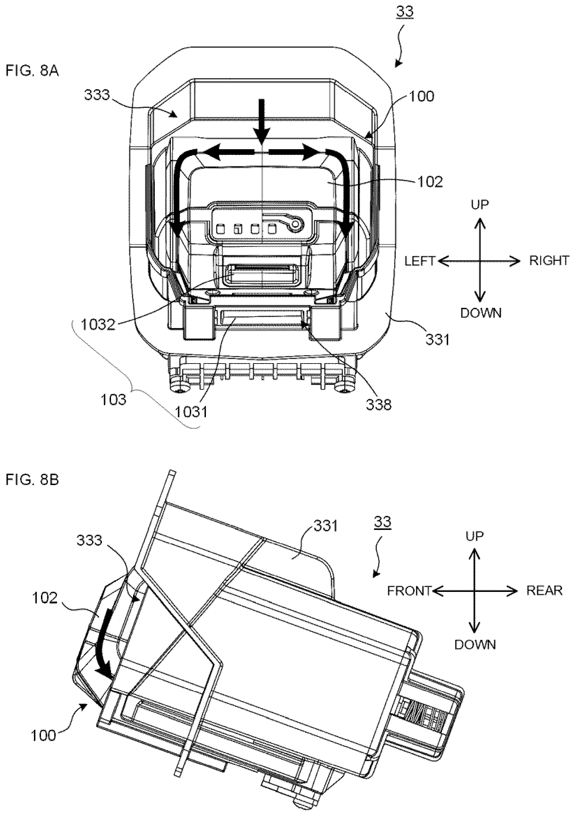

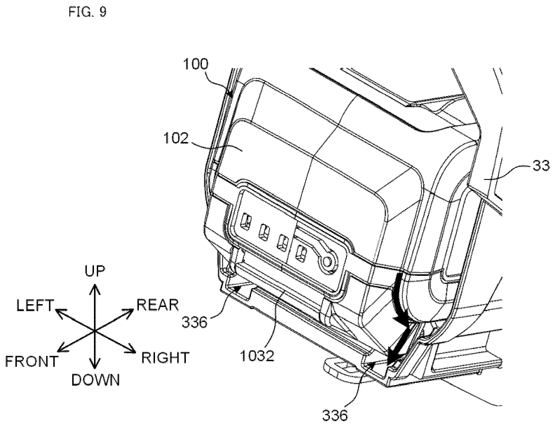

FIG. 1 is a perspective view showing a configuration of a power sprayer, which is an example of an electric working machine. FIG. 2 is a front view of the power sprayer shown in FIG. 1. FIG. 3 is a cross-sectional view taken along line A-A in FIG. 2. FIG. 4 is a perspective view showing a configuration of a battery storage portion. FIG. 5 is a side view showing a state in which a lid of the battery storage portion is opened. FIG. 6 is a perspective view showing a configuration of a battery storage case. FIG. 7 is a bottom view of the battery storage case shown in FIG. 6. FIG. 8A and FIG. 8B illustrate how the liquid flows. FIG. 9 illustrates how the liquid flows.

Note that directions of each component configuring the power sprayer are defined based on "up and down", "left and right", and "front and rear" shown in the drawings.

A power sprayer 1 shown in FIG. 1 and FIG. 2 includes a liquid storage portion 2, a battery storage portion 3, a spraying mechanism 4, a drive mechanism 5, a connecting portion 6, and a back carrying part 7. In the present embodiment, the liquid storage portion 2, the battery storage portion 3, the spraying mechanism 4, the drive mechanism 5 and the connecting portion 6 constitute a working machine body 10. The back carrying part 7 is attached to the working machine body 10. The back carrying part 7 includes a belt or the like and is used when an operator carries the working machine body 10 (power sprayer 1) on his/her back.

The liquid storage portion 2 includes a tank 21 and a lid 22.

The tank 21 is a resin container for storing liquid, and is formed by, for example, blow molding. An inlet for injecting liquid into the tank 21 is formed at the upper end of the tank 21, and the lid 22 made of resin is detachably attached to the inlet.

In addition, a drain outlet (not shown) is provided at the lower part of the tank 21 for supplying liquid to an electric pump 51 described later. One end of a water supply hose 45 is connected to a discharge outlet 511 of the electric pump 51.

The battery storage portion 3 includes a storage portion body 31 and a lid 32.

The storage portion body 31 is a box made of resin and is formed by, for example, injection molding. As shown in FIG. 3 and FIG. 4, the drive mechanism 5 is mounted on the liquid storage portion 2 side of the storage portion body 31.

The storage portion body 31 (working machine body 10) includes a recessed portion 311 and a lid 32 configured to close the recessed portion 311. The lid 32 includes a lid body 321 and a support portion 322 that supports the lid body 321 rotatably to the storage portion body 31 (working machine body 10). A storage case 33 configured to store the battery 100 is arranged in the recessed portion 311.

As shown in FIG. 6 and FIG. 7, the storage case 33 includes a tubular barrel 331, drain holes 335 opening downward from the barrel 331, and an opening 333 configured to allow the battery 100 to be introduced to an inner side of the barrel. The entirety of the storage case 33 is arranged within the recessed portion 311 of the storage portion body 31.

A metal connection terminal 334 that is electrically connected to the battery 100 is arranged on the inner side of the barrel 331 opposite the opening 333, and the drain holes 335 are provided between the connection terminal 334 and the opening 333. When the battery 100 is stored in the storage case 33 and the connection terminal of the battery 100 is connected to the connection terminal 334, the battery 100 supplies power to the control board and the drive mechanism 5 (an electric pump 51 described later).

In this way, the working machine body 10 includes the storage case 33 and the connection terminal 334.

Here, for example, when a user injects liquid into the inlet of the tank 21, if the liquid leaks onto the outer surface of the tank 21, the liquid may go along the outer surface of the tank 21 and enter (flow into) the recessed portion 311 of the storage portion body 31 particularly via the vicinity of the support portion 322. Then, the liquid may further enter (flow into) the storage case 33 arranged in the recessed portion 311.

Similarly, in a case where the power sprayer 1 is left outdoors, rainwater (liquid) may enter the storage case 33.

In the present embodiment, the drain holes 335 are provided between the connection terminal 334 and the opening 333 of the storage case 33, so that liquid that has entered the storage case 33 can be discharged out of the storage case 33 through the drain holes 335 before the liquid reaches the connection terminal 334. This makes it possible to preferably prevent or suppress adverse effects such as short circuits and corrosion to the connection terminal 334. Thus, it is possible to omit a sealing member from the storage portion body 31 or to reduce the level of sealing property, thereby reducing the number of components and manufacturing costs of the power sprayer 1.

The storage case 33 further includes a guide passage that guides liquid to the drain holes 335. By providing such a guide passage, the liquid that has entered the storage case 33 can be efficiently guided to the drain holes 335. In the present embodiment, each guide passage is provided along the inner surface of the lower side of the barrel 331 and is configured by a groove 336 that communicates with the drain hole 335. Each groove 336 makes it possible to form the guide passage without complicating the configuration of the storage case 33.

The battery 100 is a known battery, and as shown in FIG. 5, it is configured to store a secondary battery such as a lithium ion secondary battery in a rectangular parallelepiped case extending in the front-rear direction.

A slide groove 101 extending in the front-rear direction is formed as a recess on both left and right surfaces of the battery 100. On the other hand, the storage case 33 further includes a pair of slide rails 337 provided along the front-rear direction on the right and left inner surfaces of the storage case 33. By inserting the slide rails 337 into the slide grooves 101 of the battery 100 and moving the battery 100, the battery 100 can be slid and stored in the storage case 33. The grooves (guide passages) 336 are positioned below the slide rails 337. With such a configuration, dead space in the storage case 33 can be effectively utilized.

In a state where the battery 100 is stored in the storage case 33, the battery 100 protrudes from the opening 333 of the barrel 331. In addition, the case of the battery 100 includes a storage portion 102 for storing an LED lamp and a control circuit inside the case on an opposing surface (the front end in the longitudinal direction) opposite to the direction in which the battery 100 is removed from the storage case 33. Furthermore, in a state where the battery 100 is stored in the storage case 33, the storage portion 102 has a protruding portion that protrudes a predetermined amount toward the removal side from the upper side edge and the left and right side edges of the opposing surface. With such a configuration, the liquid that has entered the recessed portion 311 of the storage portion body 31 flows from top to bottom along the upper side edge and the left and right side edges of the storage portion 102 as shown in FIG. 8A and FIG. 8B. Then, the liquid flows toward the grooves 336 as shown in FIG. 9. That is, it can also be said that the battery 100 has a guide shape on its outer surface which guides liquid to the grooves (guide passage) 336. The liquid that has flowed into the grooves 336 is discharged from the drain holes 335 to the outside of the storage case 33. This preferably prevents or suppresses adverse effects caused by liquid to the connection terminal 334.

As shown in FIG. 8A, the battery 100 is provided with an ejection mechanism 103 for removing the battery 100 from the storage case 33. The ejection mechanism 103 includes an engagement portion 1031 provided so as to be retractable into the battery 100, and a lever 1032 that operates to insert the engagement portion 1031 into the battery 100.

An engagement hole 338 into which the engagement portion 1031 is inserted is formed penetrating the bottom surface of the storage case 33 near the opening 333. In a case where the battery 100 is stored in the storage case 33, the engagement portion 1031 engages with the engagement hole 338, thereby preventing the battery 100 from being removed from the storage case 33, and thus from the storage portion body 31. On the other hand, by operating the lever 1032 to release the engagement of the engagement portion 1031 with the engagement hole 338, the battery 100 can be removed from the storage case 33 (storage portion body 33).

The storage case 33 is arranged so as to be inclined downward from the opening 333 toward the opposite side to the opening 333 (the connection terminal 334 side) in a state where the storage case 33 is placed on a horizontal surface (the ground, etc.). In this case, the grooves (the guide flow path) 336 are inclined toward the drain holes 335. Thus, even if liquid enters the storage case 33 in a state where the power sprayer 1 is left on the ground outdoors, the liquid can be smoothly discharged from the drain holes 335. When the lid 32 is opened to remove the battery 100 from the storage case 33, liquid such as rainwater adhering to the lid 32 flows into the opening 333 and can be flowed from the upper side edge and the left and right side edges into the grooves (the guide flow path) 336, so that the liquid can be smoothly discharged from the drain holes 335.

In the present embodiment, the storage case 33 is arranged with the connection terminal 334 on the back carrying part 7 side. With such a configuration, when the operator carries the power sprayer 1 on his/her back, the inclination angle of the storage case 33 becomes larger than when the power sprayer 1 is placed on a horizontal surface (the ground, etc.). Thus, even if liquid such as rainwater enters the battery storage portion 3 (the storage case 33) while the power sprayer 1 is being carried on his/her back, the liquid can be smoothly discharged from the drain holes 335. In addition, by carrying the power sprayer 1 on the operator's back, the liquid remaining in the grooves (the guide flow path) 336 can be discharged more smoothly through the drain holes 335.

A water supply inlet 312 is provided at the top of the storage portion body 31. The water supply inlet 312 is connected to the drain outlet of the tank 21 and includes a filter 23 attached thereto, as shown in FIG. 4.

An electric pump 51 as the drive mechanism 5 is arranged on the upper portion of the storage portion body 31. The electric pump 51 sucks in liquid contained (stored) in the tank 21 via the drain outlet and the water supply inlet 312 of the tank 21 and supplies the liquid to the spraying mechanism 4.

As shown in FIG. 2, the spraying mechanism 4 includes a nozzle pipe 41, a grip 42 to which the nozzle pipe 41 is connected, and a water supply hose 45 connecting the grip 42 to the discharge outlet 511 of the electric pump 51. By operating a lever 43 provided on the grip 42, the user can spray liquid from an injecting portion 44 provided at the tip of the nozzle pipe 41.

The connecting portion 6 is formed by bending a metal or resin pipe 61 and connects the liquid storage portion 2 and the battery storage portion 3. The back carrying part 7 is fixed to predetermined positions of the liquid storage portion 2, the battery storage portion 3 and the connecting portion 6 by bolts or the like.

The electric working machine can be applied to a power sprayer that sprays liquid using the electric pump 51 as described above. In addition, the electric working machine can also be applied to, for example, a mist blower that supplies liquid in a mist form using a fan, or a blower that omits the liquid storage portion from the mist blower.

Furthermore, the present disclosure may be provided in each of the following aspects.
(1) A backpack type electric working machine adapted to be used by attaching a battery, comprising: a working machine body including a storage case configured to store the battery and a connection terminal configured to be electrically connected to the battery; and a back carrying part attached to the working machine body and used by an operator to carry the working machine body on his/her back, the storage case including a tubular barrel, a drain hole opening downward from the barrel, and an opening configured to allow the battery to be introduced to an inner side of the barrel, the connection terminal being arranged on an inner side of the barrel opposite the opening, the drain hole being provided between the connection terminal and the opening.
(2) The electric working machine according to (1), wherein: the battery protrudes from the opening of the barrel in a state where the battery is stored in the storage case.
(3) The electric working machine according to (1) or (2), wherein: the storage case further includes a guide passage that guides liquid to the drain hole.
(4) The electric working machine according to (3), wherein: the guide passage is provided along an inner surface of a lower side of the barrel and is a groove that communicates with the drain hole.
(5) The electric working machine according to (3) or (4), wherein: the battery has a guide shape on its outer surface that guides liquid to the guide passage.
(6) The electric working machine according to any one of (3) to (5), wherein: the storage case further includes a slide rail configured to slide and store the battery, and the guide passage is positioned below the slide rail.
(7) The electric working machine according to any one of (1) to (6), wherein: the storage case is arranged so as to be inclined downward from the opening toward an opposite side to the opening.
(8) The electric working machine according to any one of (1) to (7), wherein: the storage case is arranged with the connection terminal on the back carrying part side.
(9) The electric working machine according to any one of (1) to (8), wherein: the working machine body includes a recessed portion in which the storage case is arranged and a lid configured to close the recessed portion, and the lid includes a lid body and a support portion that supports the lid body rotatably to the working machine body.
(10) The electric working machine according to any one of (1) to (9), wherein: the electric working machine is a power sprayer, a mist blower, or a blower.

Of course, the present disclosure is not limited thereto.

Finally, various embodiments of the present disclosure have been described, but these are presented as examples and are not intended at all to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the disclosure described in claims and the equivalent scope thereof.

## Claims

1. A backpack type electric working machine adapted to be used by attaching a battery, comprising:
a working machine body including a storage case configured to store the battery and a connection terminal configured to be electrically connected to the battery; and
a back carrying part attached to the working machine body and used by an operator to carry the working machine body on his/her back,
the storage case including a tubular barrel, a drain hole opening downward from the barrel, and an opening configured to allow the battery to be introduced to an inner side of the barrel,
the connection terminal being arranged on an inner side of the barrel opposite the opening,
the drain hole being provided between the connection terminal and the opening.

2. The electric working machine according to claim 1, wherein:
the battery protrudes from the opening of the barrel in a state where the battery is stored in the storage case.

3. The electric working machine according to claim 1 or 2, wherein:
the storage case further includes a guide passage that guides liquid to the drain hole.

4. The electric working machine according to claim 3, wherein:
the guide passage is provided along an inner surface of a lower side of the barrel and is a groove that communicates with the drain hole.

5. The electric working machine according to claim 3 or 4, wherein:
the battery has a guide shape on its outer surface that guides liquid to the guide passage.

6. The electric working machine according to any one of claims 3 to 5, wherein:
the storage case further includes a slide rail configured to slide and store the battery, and
the guide passage is positioned below the slide rail.

7. The electric working machine according to any one of claims 1 to 6, wherein:
the storage case is arranged so as to be inclined downward from the opening toward an opposite side to the opening.

8. The electric working machine according to any one of claims 1 to 7, wherein:
the storage case is arranged with the connection terminal on the back carrying part side.

9. The electric working machine according to any one of claims 1 to 8, wherein:
the working machine body includes a recessed portion in which the storage case is arranged and a lid configured to close the recessed portion, and
the lid includes a lid body and a support portion that supports the lid body rotatably to the working machine body.

10. The electric working machine according to any one of claims 1 to 9, wherein:
the electric working machine is a power sprayer, a mist blower, or a blower.
